# EUROPÄISCHE PATENTANMELDUNG

(11) **EP 4 092 281 A1**
(43) Veröffentlichungstag der Anmeldung: **23.11.2022**
(21) Anmeldenummer: 20913566.4
(22) Anmeldetag: 13.01.2020
(51) Int. Cl.: F16C 19/52

(54) **SENSORVORRICHTUNG UND LAGERBAUTEIL**

(71) Anmelder: Schaeffler Technologies AG & Co. KG, 91074 Herzogenaurach (DE)
(72) Erfinder: GUAN, Ran, Shanghai 201104 (CN)
(86) Internationale Anmeldenummer: PCT/CN2020/071715
(87) Internationale Veröffentlichungsnummer: WO 2021/142569

(57) **Zusammenfassung**

Die vorliegende Erfindung betrifft eine Sensorvorrichtung für ein Lager und eine Lagerkomponente. Die Sensorvorrichtung umfasst einen Sensorkörper zum Montieren in das Lager mittels einer Presspassung. Der Sensorkörper ist versehen mit: einem Sensormessmodul, umfassend einen Drucksensor zum Messen der Last des Lagers und einen Temperatursensor zum Messen der Temperatur der Sensorvorrichtung, wobei die gemessene Last mittels der gemessenen Temperatur korrigiert wird; einem Drahtloskommunikationsmodul, das zum drahtlosen Übertragen von Lagerinformationen von dem Sensormessmodul verwendet wird; und einem Drahtlosenergiezufuhrmodul, das zum Zuführen von Energie für das Sensormessmodul und das Drahtloskommunikationsmodul verwendet wird. Die Lagerkomponente umfasst ein Lager und die Sensorvorrichtung.

## Beschreibung

### Technisches Gebiet

Die vorliegende Erfindung betrifft eine Sensorvorrichtung für ein Lager, insbesondere eine drahtlose Sensorvorrichtung. Die vorliegende Erfindung betrifft ferner eine Lagerkomponente, die eine Sensorvorrichtung umfasst.

### Hintergrund

Die Lagerlast ist ein sehr wichtiger Parameter zur Steuerung, Optimierung und Überwachung des Betriebs einer Anlage. Daher besteht immer Bedarf an einer Messlösung für die Lagerlast, insbesondere der Last von großformatigen Lagern im Bereich der Windenergie. Derzeit gibt es eine Vielfalt an Lastmesslösungen für Lager.

Beispielsweise lehrt das chinesische Patentdokument CN 102265046 A eine Lagereinheit, die eine Last misst, indem Dehnungsmessstreifen mit einem Lastbereich des Gehäuses, insbesondere dem Lagersitz, verbunden werden.

Als weiteres Beispiel lehrt das chinesische Patentdokument CN 107448362 B eine Zustandsdetektionslösung für ein Schwenklager, die einen Prozess zum Detektieren einer Verschiebungsänderung, die durch eine Last verursacht wird, durch Verwenden eines Wirbelstromsensors offenbart.

Als weiteres Beispiel lehrt das chinesische Patentdokument CN 104595352 B eine Lastdetektionsvorrichtung für ein Wälzlager, und die Lastdetektionsvorrichtung ist als Vorrichtung vom Stifttyp konfiguriert.

Die vorstehend erwähnten Lagerlastmesslösungen weisen jedoch gewisse Defizite auf.

Für die Messlösung des Verwendens eines Dehnungsmessstreifens ändert sich bei vielen Anwendungen die Richtung der Lagerlast während des Betriebs ständig, weshalb mehrere Dehnungsmessstreifen erforderlich sind, was die Konstruktionslösung kompliziert und kostspielig macht.

Da zudem der Wirbelstromsensor durch die Temperatur stark beeinträchtigt wird, variiert bei der Verwendung der Messlösung eines Wirbelstromsensors die Verschiebung (radial oder axial) zwischen einem Innenring und einem Außenring, wie sie durch den Wirbelstromsensor gemessen wird, nicht nur mit der Last, sondern auch mit der Temperatur. Zudem benötigen Lager mit Wirbelstromsensoren in der Regel zusätzlichen axialen Bauraum und sind daher nicht gegen Standardausführungen austauschbar.

Außerdem können die Energiezufuhr und die Signalübertragung Beschränkungen für Lastsensoren vom Stifttyp mit sich bringen. Wenn eine Echtzeitmessung erforderlich ist, ist es notwendig, eine Vielzahl der stiftartigen Lastsensoren in der Umfangsrichtung des feststehenden Lagerrings anzuordnen. Außerdem macht die Anforderung an eine spezielle Auslegung der elektrischen Leiter die Konstruktionsarbeit noch komplizierter.

### Kurzdarstellunq

Daher besteht das durch die vorliegende Erfindung zu lösende technische Problem darin, eine Sensorvorrichtung für ein Lager bereitzustellen, die die vorstehend erwähnten Mängel überwinden kann.

Das vorstehend erwähnte technische Problem wird durch eine Sensorvorrichtung für ein Lager gelöst. Die Sensorvorrichtung umfasst einen Sensorkörper zum Montieren in einem Lager mittels einer Presspassung, wobei der Sensorkörper versehen ist mit: einem Sensormessmodul, einem Drahtloskommunikationsmodul und einem Drahtlosenergiezufuhrmodul.

Der Sensorkörper ist mittels einer Presspassung in einem Lagerelement des Lagers montiert. Das Lagerelement kann dabei ein Wälzelement eines Wälzlagers oder ein feststehender oder rotierender Lagerring sein, beispielsweise ein Außenring oder ein Innenring, wobei das Wälzelement ein nicht kugelförmiges Wälzelement ist. Mittels einer Presspassung können die von dem Lagerelement in verschiedenen Richtungen aufgenommenen Lasten zur Lastmessung durch das Sensormessmodul am Sensorkörper an den Sensorkörper geleitet werden. Zusätzlich zum Leiten der Last weist der Sensorkörper auch eine Lagerfunktion auf, die es ermöglicht, die Elemente der vorstehend erwähnten drei Module fest in das Lagerelement zu montieren.

Das Sensormessmodul umfasst einen Drucksensor zum Messen der Last des Lagers und einen Temperatursensor zum Messen der Temperatur der Sensorvorrichtung, wobei die gemessene Last durch die gemessene Temperatur korrigiert wird.

Das Sensormessmodul umfasst dabei ferner eine Messsignalverarbeitungseinheit für den Drucksensor und/oder den Temperatursensor. Die Messsignalverarbeitungseinheit kann beispielsweise eine Messschaltung, die an den Sensor angepasst ist, eine Verstärkungsschaltung, eine Analog-Digital-Wandlungsschaltung und dergleichen umfassen. Gegebenenfalls kann die Messsignalverarbeitungseinheit ferner eine Ausgleichsbetriebseinheit umfassen, die die durch den Drucksensor gemessene Last mittels der durch den Temperatursensor gemessenen Temperatur korrigiert. Der Drucksensor kann dabei ein piezoelektrischer Drucksensor, ein piezoresistiver Drucksensor, ein kapazitiver Drucksensor oder ein elektromagnetischer Drucksensor sein. Der Temperatursensor kann dabei ein separat angeordneter Sensor sein, vorzugsweise ein in einen Chip integrierter Temperatursensor.

Das Drahtloskommunikationsmodul wird zum drahtlosen Übertragen von Lagerinformationen von dem Sensormessmodul verwendet.

Dabei umfasst das Drahtloskommunikationsmodul eine Signalverarbeitungseinheit und ein am Lager angeordneten Signalübertragungs- und/oder -empfangsteil, sodass drahtlose Kommunikation mit dem außerhalb des Lagers angeordneten Empfangs- bzw. Übertragungsteil durchgeführt werden kann. Das Drahtloskommunikationsmodul kann die nach der Temperaturkorrektur erhaltenen Lastinformationen drahtlos von dem Lager an das außerhalb des Lagers angeordnete Signalempfangsteil übertragen, damit sie von entsprechenden Technikern und/oder einer entsprechenden Ausrüstung gelesen oder genutzt werden kann. Das Drahtloskommunikationsmodul kann auch die Lagerlastinformationen und die damit abgestimmten Temperaturinformationen drahtlos von dem Lager zu dem außerhalb des Lagers angeordneten Signalempfangsteil übertragen und, nachdem eine Temperaturkorrektur durch die Ausgleichsbetriebseinheit außerhalb des Lagers durchgeführt wurde, die nach der Temperaturkorrektur erhaltenen Lagerlastinformationen für die entsprechenden technischen Techniker und/oder die entsprechende technische Ausrüstung bereitstellen.

Das Drahtlosenergiezufuhrmodul wird zum Zuführen von Energie für das Sensormessmodul und das Drahtloskommunikationsmodul verwendet.

Dabei umfasst das Drahtlosenergiezufuhrmodul eine an dem Lager angeordnete Energieempfangsantenne, die durch eine außerhalb des Lagers angeordnete Energiezufuhrgegenstückausrüstung zugeführte Energie von elektromagnetischen Wellen erhalten kann. Die Energiezufuhrgegenstückausrüstung umfasst dabei beispielsweise eine Energiezufuhrantenne, die elektromagnetisch mit der Energieempfangsantenne gekoppelt sein kann, eine Energiezufuhrschaltung, die die Energiezufuhrantenne versorgt, und eine entsprechende Steuereinheit. Das Drahtlosenergiezufuhrmodul kann auch eine Energieverwaltungsschaltung umfassen.

In einer besonders bevorzugten Ausführungsform weist der Sensorkörper einen stiftförmigen Grundkörper und eine Leiterplatte auf, wobei der Grundkörper mittels einer Presspassung in das Lager montiert werden kann und wobei die Leiterplatte zum teilweisen Montieren von Elementen, insbesondere elektronischen Elementen, in dem Sensormessmodul, dem Drahtloskommunikationsmodul und dem Drahtlosenergiezufuhrmodul in dem Grundkörper verwendet wird. Das heißt, der Sensorkörper ist einstückig als eine stiftartige Struktur ausgebildet, d.h. als ein Sensorstift. Der Sensorkörper kann in einem Montageloch des Lagerelements durch den Grundkörper hindurch montiert werden, wobei der Grundkörper mindestens teilweise in das Montageloch pressgepasst werden kann. Vorzugsweise wird der Grundkörper an einem axialen Ende in das Montageloch pressgepasst. Die Querschnitte des Grundkörpers und des Montagelochs können dementsprechend in verschiedenen Formen konstruiert sein, vorzugsweise als regelmäßiges Vieleck, besonders bevorzugt als Kreis. Vorzugsweise ist das Montageloch ein Sackloch. Dabei verläuft das Montageloch im Lagerring vorzugsweise parallel zu einer Mittelachse des Lagers oder Lagerrings, wodurch eine effiziente Messung der Lagerlast ermöglicht wird. Das Montageloch im Wälzelement erstreckt sich vorzugsweise entlang einer Mittelachse des Wälzelements. Vorzugsweise ist an der Umfangsfläche des Grundkörpers eine Ebene zum Anordnen der Leiterplatte konfiguriert. Dabei steht die Ebene vorzugsweise senkrecht auf die axiale Stirnseite des Grundkörpers. Durch die Anordnung der Ebene wird so weit wie möglich eine gegenseitige Störung der Leiterplatte und des Presspassbereichs des Grundkörpers vermieden.

In einer bevorzugten Ausführungsform umfasst das Drahtloskommunikationsmodul einen auf der Leiterplatte angeordneten RFID-Chip und eine auf dem Grundkörper angeordnete Antenne, wobei der RFID-Chip und die Antenne zum Durchführen drahtloser Kommunikation mit einer außerhalb des Lagers angeordneten Kommunikationsgegenstückausrüstung verwendet werden. Dabei wird die Radiofrequenzidentifikationstechnologie (RFID-Technologie) dazu verwendet, eine drahtlose Kommunikation zu erreichen. Insbesondere bilden der RFID-Chip und die Antenne zusammen ein RFID-Tag und umfasst die Kommunikationsgegenstückausrüstung beispielsweise ein RFID-Lese-/Schreibgerät, das drahtlose Datenkommunikation mit dem RFID-Tag durchführen kann. Das heißt, die durch das Sensormessmodul bereitgestellten Lagerinformationen werden auf eine elektromagnetische HF-Trägerwelle moduliert und durch die Antenne übertragen, sodass der Lastzustand des Lagers drahtlos in Echtzeit überwacht werden kann. Hier ist die Antenne vorzugsweise eine Miniaturantenne, etwa eine Metalldipolantenne, eine gedruckte PCB-Antenne oder eine Keramikantenne. Vorzugsweise ist die Antenne eine Keramikantenne, die bei kleiner Baugröße einen großen Antennengewinn erhalten kann.

In einer bevorzugten Ausführungsform umfasst der Drucksensor mindestens zwei Dehnungsmessstreifen, wobei die mindestens zwei Dehnungsmessstreifen in einem Bereich des Grundkörpers zur Erzielung einer Presspassung angeordnet sind, wobei einer der mindestens zwei Dehnungsmessstreifen an einer axialen Stirnseite des Grundkörpers angeordnet sein kann und der andere der mindestens zwei Dehnungsmessstreifen an einer Umfangsfläche des Grundkörpers derart angeordnet sein kann, dass sie sich mindestens teilweise in axialer Richtung erstrecken. Vorzugsweise sind die Dehnungsmessstreifen auf diese Weise derart in der axialen Stirnseite angeordnet, dass ihre Messrichtung sich in einer radialen Richtung des Grundkörpers erstreckt oder durch eine Mittelachse des Grundkörpers verläuft. Vorzugsweise ist im Bereich des axialen Endes des Grundkörpers, wo eine Presspassung erreicht wird, an der Umfangsfläche des Grundkörpers teilweise eine Ebene ausgebildet, um einen Aufnahmeraum für die Dehnungsmessstreifen zu bilden. Dabei steht die Ebene vorzugsweise senkrecht auf der axialen Stirnseite des Grundkörpers. Vorzugsweise sind die Dehnungsmessstreifen derart in der Aufnahmeebene angeordnet, dass sich ihre Messrichtung entlang einer axialen Richtung des Grundkörpers erstreckt oder parallel zu einer Mittelachse des Grundkörpers verläuft. Jeder Dehnungsmessstreifen ist dabei über elektrische Leiter mit einer entsprechenden Messschaltung verbunden. Dabei können zwei Dehnungsmessstreifen als Messdehnungsmessstreifen bzw. Referenzdehnungsmessstreifen verwendet werden. Vorzugsweise sind die Messrichtungen des Messdehnungsmessstreifens und des Referenzdehnungsmessstreifens senkrecht zueinander. Vorzugsweise wird der an der axialen Stirnseite des Grundkörpers angeordnete Dehnungsmessstreifen als Messdehnungsmessstreifen und der im Aufnahmeraum der Umfangsfläche des Grundkörpers angeordnete Dehnungsmessstreifen als Referenzdehnungsmessstreifen verwendet. Besonders bevorzugt weisen dabei die den Aufnahmeraum bildende Ebene und die Leiterplatte die gleiche axiale Position auf und/oder verlaufen parallel zueinander. Dabei kann der Dehnungsmessstreifen ein Metallwiderstandsdehnungsmessstreifen oder ein Halbleiterdehnungsmessstreifen sein. Um den Energieverbrauch so weit wie möglich zu reduzieren, ist der Messdehnungsmessstreifen vorzugsweise ein Halbleiterdehnungsmessstreifen, der die Vorteile einer großen Widerstandsdehnung und einer hohen Dehnungsempfindlichkeit aufweist. Der Dehnungsmessstreifen kann auf verschiedene Arten an dem Grundkörper montiert werden. Beispielsweise kann der Dehnungsmessstreifen durch einen Klebstoff an dem Grundkörper befestigt werden. Alternativ dazu kann der Dehnungsmessstreifen auch durch Punktschweißen oder ein anderes Schweißverfahren an dem Grundkörper befestigt werden. Alternativ dazu kann der Dehnungsmessstreifen auch durch einen MEMS-Fertigungsprozess an dem Grundkörper befestigt werden.

Dabei sind auf der Leiterplatte vorzugsweise eine Messschaltung und eine Messsignalverarbeitungsschaltung für den Dehnungsmessstreifen angeordnet. Die Messschaltung ist dabei vorzugsweise eine Wheatstone-Brücke, insbesondere eine Halbbrückenschaltung für zwei Dehnungsmessstreifen. Die Messsignalverarbeitungsschaltung umfasst eine Verstärkungsschaltung, eine Analog-Digital-Wandlungsschaltung, usw.

Dabei stellt der RFID-Chip besonders bevorzugt die Analog-Digital-Wandlungsschaltung in der Messsignalverarbeitungsschaltung bereit. Daher wird der Integrationsgrad der Sensorvorrichtung verbessert, was zum Reduzieren der Größe der Sensorvorrichtung, insbesondere des Sensorkörpers, vorteilhaft ist.

Besonders bevorzugt stellt der RFID-Chip dabei einen Temperatursensor bereit. Somit muss kein Temperatursensor zusätzlich bereitgestellt werden und wird nur der im RFID-Chip integrierte Temperatursensor verwendet, was den Integrationsgrad der Sensorvorrichtung verbessert und zum Reduzieren der Größe der Sensorvorrichtung, insbesondere des Sensorkörpers, vorteilhaft ist.

Die Antenne ist dabei vorzugsweise an einer axialen Stirnseite des Grundkörpers angeordnet, wobei die axiale Stirnseite, an der die Antenne angeordnet ist, einer axialen Stirnseite gegenüberliegt, an der der Dehnungsmessstreifen angeordnet ist. Somit kann sich, wenn der Grundkörper an dem Lagerelement montiert ist, die Antenne an der axialen Stirnseite des Lagers befinden, um dessen Funktion besser zu erreichen.

Besonders bevorzugt ist dabei an einer Außenseite der Antenne eine Antennenabdeckung bereitgestellt. In diesem Fall besteht die Antennenabdeckung aus Kunststoff, etwa ABS, PPS oder PTFE. Die Antenne wird dadurch vorteilhafterweise geschützt, wenn Hochfrequenzsignale niedriger Leistung durch die Antennenabdeckung hindurchtreten können. Dabei ist es besonders vorteilhaft, zwischen der Antenne und der Antennenabdeckung ein Dichtungselastomer, insbesondere einen Dichtungsgummi, bereitzustellen, damit die Antenne besser geschützt werden kann.

In einer bevorzugten Ausführungsform kann die vorstehend beschriebene Antenne als Energieempfangsantenne für das Drahtlosenergiezufuhrmodul verwendet werden, um die durch eine außerhalb des Lagers angeordnete Energiezufuhrgegenstückausrüstung zugeführte Energie drahtlos zu erhalten. Wenn die Energiezufuhrantenne der Energiezufuhrgegenstückausrüstung elektromagnetische Wellen aussendet, bestrahlen die elektromagnetischen Wellen durch die Antennenabdeckung und ein möglicherweise vorhandenes elastisches Dichtungsteil die Energieempfangsantenne, und dann erhält die Energieempfangsantenne Energie von den elektromagnetischen Wellen. wobei die erhaltene Energie in einem Kondensator gespeichert werden kann.

Dabei stellt der RFID-Chip besonders bevorzugt eine Energieverwaltungsschaltung des Drahtlosenergiezufuhrmoduls bereit. Daher kann die im Kondensator gespeicherte Energie durch eine Energieverwaltungsschaltung im RFID-Sensorchip verarbeitet werden, um eine stabile Energiezufuhr bereitzustellen. Eine derartige Konstruktion verbessert den Integrationsgrad der Sensorvorrichtung und ist vorteilhaft zum Reduzieren der Größe der Sensorvorrichtung, insbesondere des Sensorkörpers.

In einer vorteilhaften Ausgestaltung ist innerhalb des Grundkörpers ein Kanal zur Aufnahme von elektrischen Leitern angeordnet. Die Kanäle können in Form eines Durchgangslochs, eines Sacklochs oder einer Nut usw. ausgebildet sein. Elektrische Leiter sind dabei beispielsweise Leiter zum elektrischen Verbinden von Dehnungsmessstreifen mit der Leiterplatte. Elektrische Leiter sind dabei beispielsweise Leiter zum elektrischen Verbinden der Antenne mit der Leiterplatte. Durch die Anordnung des Kanals wird besonders der Einfluss einer Verdrahtung auf einen Presspassbereich vermieden. Das Material der elektrischen Leiter ist derart gewählt, dass der Temperaturkoeffizient für den Widerstand innerhalb eines normalen Arbeitstemperaturbereichs weniger schwankt, um den Einfluss der Temperatur auf das Messergebnis der Sensorvorrichtung so weit wie möglich zu eliminieren. In einer vorteilhaften Ausführungsform ist der Grundfkörper mit einer zusätzlichen Verbindungsstruktur zum Verbinden mit dem Lagerelement versehen. Vorzugsweise kann an einem axialen Ende des Grundkörpers ein Außengewinde und in dem Montageloch, besonders im Stufenteil des Montagelochs, ein Innengewinde vorgesehen sein, wobei das axiale Ende an der Öffnung des Montagelochs angeordnet ist, wenn die Sensorvorrichtung in dem Montageloch montiert ist, sodass der Grundkörper und das Montageloch mithilfe eines Gewindes verbunden werden können.

Besonders vorteilhaft ist dabei, wenn der Grundkörper aus dem gleichen Material besteht wie das Lagerelement, an dem die Sensorvorrichtung montiert ist. Der Einfluss von temperaturbedingten Dimensionsänderungen des Materials kann auf diese Weise minimiert werden.

In einer vorteilhaften Ausgestaltung ist die Sensorvorrichtung mindestens teilweise verkapselt, wodurch Stöße oder die Einwirkungen von Flüssigkeiten auf die Sensorvorrichtung, insbesondere elektronische Komponenten in der Sensorvorrichtung, vorteilhaft reduziert oder unterbunden werden. Dabei kann durch den Verkapselungsprozess vorteilhafterweise die Verbindung des Grundkörpers zur Umgebung unterbunden werden. Vorteilhafterweise kann die Verkapselung unter Verwendung von Kunststoff, Gummi oder einem Klebstoff oder dergleichen durchgeführt werden.

Das vorstehend genannte technische Problem kann auch durch eine Lagerkomponente gelöst werden, die ein Lager, insbesondere ein Wälzlager, und die Sensorvorrichtung wie vorstehend beschrieben umfasst.

Dabei kann der Sensorkörper der Sensorvorrichtung vorzugsweise in einem Montageloch eines Außenrings oder eines Innenrings des Lagers montiert sein, wobei sich das Montageloch entlang einer axialen Richtung des Lagers erstreckt, sich also parallel zu einer Mittelachse des Lagers erstreckt. Alternativ dazu und vorzugsweise ist der Sensorkörper der Sensorvorrichtung in einem Montageloch des Wälzelements des Lagers montiert, wobei sich das Montageloch entlang der Mittelachse des Wälzelements erstreckt.

Das Montageloch ist dabei vorzugsweise ein Sackloch. Vorzugsweise ist der Sensorkörper derart in dem Montageloch montiert, dass sich die Antenne der Sensorvorrichtung für das Drahtlosenergiezufuhrmodul an der Öffnung des Montagelochs befindet. Vorzugsweise ist der Sensorkörper derart an dem Montageloch montiert, dass die Sensorvorrichtung nicht aus dem Montageloch herausragt, wodurch eine Kollision zwischen der Sensorvorrichtung und anderen Elementen vermieden wird. Ist der Sensorkörper vorzugsweise an einem Lagerring, etwa einem Außenring oder einem Innenring, montiert, ist er vorzugsweise derart am Montageloch des Lagerrings montiert, dass die Messrichtung der an der axialen Stirnseite des Grundkörpers in dem Sensormessmodul angeordneten Dehnungsmessstreifen entlang der radialen Richtung des Lagers ausgerichtet ist.

Das vorstehend erwähnte technische Problem kann auch durch ein Sensorsystem für ein Lager gelöst werden, wobei das Sensorsystem eine Sensorvorrichtung mit den vorstehend erwähnten Merkmalen und eine außerhalb des Lagers angeordnete Sensorvorrichtungsgegenstückausrüstung umfasst. Dabei umfasst die Sensorvorrichtungsgegenstückausrüstung eine Kommunikationsgegenstückausrüstung und eine Energiezufuhrgegenstückausrüstung, wobei die Kommunikationsgegenstückausrüstung drahtlose Kommunikation mit dem Drahtloskommunikationsmodul der an dem Lager angeordneten Sensorvorrichtung durchführen kann und die Energiezufuhrgegenstückausrüstung mit dem Drahtlosenergiezufuhrmodul der Sensorvorrichtung des Lagers zusammenwirken kann, um dem Sensormessmodul und dem Drahtloskommunikationsmodul der Sensorvorrichtung drahtlos oder berührungslos Energie zuzuführen. Dabei können mehrere Sensorvorrichtungen mit einer gemeinsamen Sensorvorrichtungsgegenstückausrüstung abgestimmt werden, wobei jede Sensorvorrichtung ihre eigene Kennung aufweisen kann. In diesem Fall kann die Vielzahl von Sensorvorrichtungen an demselben Lager oder an unterschiedlichen Lagern angeordnet sein. Das vorstehend erwähnte technische Problem kann auch durch eine Lagerbaugruppe gelöst werden, die ein Lager und das Sensorsystem wie vorstehend beschrieben umfasst. Zusammenfassend kann mit der Lösung der vorliegenden Erfindung eine Vielfalt an Vorteilen erreicht werden. Da zusätzlich dazu die Temperatur an der Sensorvorrichtung gemessen wird, kann der durch den Drucksensor gemessene Lastwert anhand der gemessenen Temperatur korrigiert werden, insbesondere kann der Messfehler, der durch den Einfluss der Temperatur auf die elektrischen Leiter und den Drucksensor, etwa die Dehnungsmessstreifen, verursacht wird, reduziert und damit die Genauigkeit der Lastmessung verbessert werden.

Da die Sensorvorrichtung außerdem mit dem Drahtloskommunikationsmodul und dem Drahtlosenergiezufuhrmodul konfiguriert ist, kann die Sensorvorrichtung die Lagerlastinformationen in Echtzeit bereitstellen, wenn sie an einem rotierenden Element des Lagers angeordnet ist, etwa an einem Wälzelement und einem drehbaren Lagerring. Da die Sensorvorrichtung an dem rotierenden Element des Lagers angeordnet sein kann, kann die Sensorvorrichtung auch Lastmessungen an verschiedenen Positionen in der Umfangsrichtung des Lagers während der Rotation mit dem rotierenden Element durchführen. Daher können die Messanforderungen erfüllt werden, indem in jedem Lager nur eine derartige Sensorvorrichtung bereitgestellt ist. Verglichen mit der bestehenden Lösung, die mehrere Sensorvorrichtungen zur Montage an einem feststehenden Lagerring erfordert, und der Lösung, die keine Koexistenz zwischen Echtzeitmessung und Montage an einem rotierenden Element erreichen kann, erreicht die Sensorvorrichtung hierbei eine Echtzeitmessung; zudem erfordert sie weniger Montagelöcher und eliminiert die Anordnung von Kommunikationsleitungen und Energiezufuhrleitungen, was eine einfachere Konstruktionsstruktur, niedrigere Kosten und höhere Zuverlässigkeit bringt. Da der Sensor zudem batterieunabhängig arbeitet, entfallen Wartungsarbeiten wie Batteriewechsel.

Da der RFID-Chip außerdem eine Analog-Digital-Wandlungsschaltung und einen Temperatursensor für das Sensormessmodul und die Energieverwaltungsschaltung für das Drahtlosenergiezufuhrmodul bereitstellen kann, während die Funktion der drahtlosen Kommunikation mit der Kommunikationsgegenstückausrüstung erreicht wird, ist es möglich, einen hohen Integrationsgrad der Sensorvorrichtung sowie eine Reduzierung sowohl der Größe der Sensorvorrichtung als auch der Kosten zu erreichen. Dank des hochintegrierten RFID-Chips und der Dehnungsmessstreifen mit hohem Widerstand und hoher Empfindlichkeit kann der Energieverbrauch des Sensors auf einige hundert Mikrowatt oder weniger reduziert werden. In einer offenen Umgebung kann die effektive Entfernung einer derartigen Sensorvorrichtung, die einen RFID-Chip und einen Dehnungsmessstreifen integriert, 5 Meter oder mehr betragen, was die Sensorvorrichtung für die meisten Anwendungen geeignet macht.

### Kurzbeschreibung der Zeichnungen

Bevorzugte Ausführungsformen der vorliegenden Erfindung werden nachstehend unter Bezugnahme auf die Zeichnungen schematisch veranschaulicht. Mit den Zeichnungen verhält es sich wie folgt:
- FIG. 1: ist eine Teilquerschnittsansicht einer Lagerkomponente gemäß einer bevorzugten Ausführungsform;
- FIG. 2: ist eine perspektivische Ansicht der Sensorvorrichtung in der Lagerkomponente gemäß FIG. 1; und
- FIG. 3: ist eine Querschnittsansicht der Sensorvorrichtung gemäß FIG. 2, erhalten durch Schneiden entlang einer axialen Richtung davon.

### Ausführliche Beschreibung

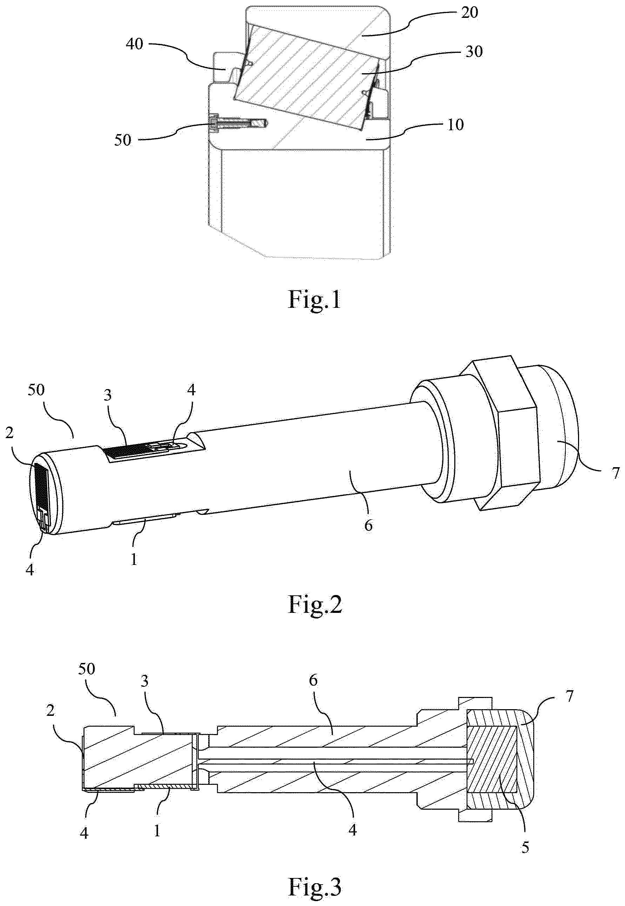

FIG. 1 zeigt eine Teilquerschnittsansicht einer Lagerkomponente gemäß einer bevorzugten Ausführungsform. Die Lagerkomponente umfasst ein als Kegelrollenlager ausgebildetes Lager und eine Sensorvorrichtung 50. Wie FIG. 1 zeigt, umfasst das Lager einen Außenring 20, einen Innenring 10 und einen Halter 40 sowie ein Wälzelement 30 vom Kegelrollentyp, das zwischen dem Außenring 20 und dem Innenring 10 angeordnet ist.

Wie FIG. 1 zeigt, ist der Innenring 10 des Lagers mit einem Montageloch zum Aufnehmen einer Sensorvorrichtung konfiguriert. Das Montageloch ist als Sackloch konfiguriert und erstreckt sich parallel zu einer Mittelachse des Lagers. In dieser Ausführungsform ist die Sensorvorrichtung 50 als Sensorstift zur drahtlosen Kommunikation und drahtlosen Energiezufuhr implementiert.

FIG. 2 und FIG. 3 zeigen jeweils eine perspektivische Ansicht der Sensorvorrichtung 50 in der Lagerkomponente gemäß FIG. 1 und eine Querschnittsansicht, die durch Schneiden der Sensorvorrichtung 50 entlang der axialen Richtung erhalten wird. Wie FIG. 2 und FIG. 3 zeigen, umfasst die Sensorvorrichtung 50 einen Sensorkörper zur Montage in dem Innenring 10 des Lagers. Der Sensorkörper ist mit einem Sensormessmodul, einem Drahtloskommunikationsmodul und einem Drahtlosenergiezufuhrmodul konfiguriert.

Der Sensorkörper umfasst einen stiftförmigen Grundkörper 6 und eine Leiterplatte 1. Der stiftförmige Grundkörper 6 weist einen im Wesentlichen kreisförmigen Querschnitt auf. Der stiftförmige Grundkörper 6 ist aus dem gleichen Material wie der Innenring 10 hergestellt, wodurch der Effekt von temperaturbedingten Größenänderungen des Materials minimiert wird. Die Umfangsfläche des Grundkörper 6 weist teilweise eine Ebene auf, auf der die Leiterplatte 1 angeordnet ist.

Unter Bezugnahme auf die FIG. 1, 2 und 3 ist der Sensorkörper mit einem stiftförmigen Grundkörper 6 mittels Presspassung im Montageloch des Innenrings 10 befestigt. Wenn der Grundkörper 6 montiert ist, ist des Weiteren das axiale Ende des Grundkörpers an der Öffnung des Montagelochs ebenfalls mit einem Stufenteil versehen und ist dessen Umfangsfläche mit einem nicht im Detail gezeigten Außengewinde versehen, wobei das Außengewinde mit einem in dem gestuften Montageloch konfigurierten Innengewinde abgestimmt sein kann, um eine Hilfsgewindeverbindung zu erreichen.

Das Sensormessmodul umfasst einen Drucksensor zum Messen der axialen und radialen Lasten des Lagers und einen Temperatursensor zum Messen der Temperatur der Sensorvorrichtung. Der Drucksensor umfasst zwei Dehnungsmessstreifen, nämlich einen Messdehnungsmessstreifen 2 und einen Referenzdehnungsmessstreifen 3, die in einem Presspassbereich angeordnet sind. Der Messdehnungsmessstreifen 2 und der Referenzdehnungsmessstreifen 3 sind dabei vorzugsweise Halbleiterdehnungsmessstreifen mit einer großen Widerstandsdehnung und einer hohen Dehnungsempfindlichkeit. Der Messdehnungsmessstreifen 2 ist an einer dem Lochgrund des Montagelochs zugewandten axialen Stirnseite des Grundkörpers 6 angebracht. Dabei fluchtet die Längsrichtung des Messdehnungsmessstreifens 2 mit der radialen Richtung des Grundkörpers 6. In dem Bereich, in dem die Presspassung des Grundkörpers 6 erreicht ist, ist an der Umfangsfläche des Grundkörpers 6 teilweise eine Ebene ausgebildet, wobei die Ebene senkrecht auf der axialen Stirnseite des Grundkörpers 6 ist, an der der Referenzdehnungsmessstreifen 3 angeordnet ist. Dabei sind die Ebene, in der die Referenzdehnungsmessstreifen 3 angeordnet sind, und die Ebene, in der die Leiterplatte 1 angeordnet ist, an dem Grundkörper 6 parallel zueinander. Dabei ist die Längsrichtung des Referenzdehnungsmessstreifens 3 parallel zu einer Mittelachse des Grundkörpers 6. Der Messdehnungsmessstreifen 2 und der Referenzdehnungsmessstreifen 3 sind jeweils über elektrische Leiter 4 mit der Messleiterplatte 1 verbunden. Dabei ist in dem Grundkörper 6 ein Kanal zur Aufnahme und Führung der elektrischen Leiter 4 konfiguriert. Die Leiterplatte 1 ist mit einer Messschaltung für Dehnungsmessstreifen, einer Verstärkungsschaltung und einer Analog-Digital-Wandlungsschaltung versehen, wobei die Messschaltung hier eine Wheatstone-Brücke ist und die Analog-Digital-Wandlungsschaltung durch einen auf der Leiterplatte 1 angeordneten RFID-Chip bereitgestellt ist. Während des Messvorgangs bewirkt die durch die Lagerlast verursachte Dehnung des Grundkörpers 6 eine Widerstandsänderung des Messdehnungsmessstreifens 2, wobei die Widerstandsänderung mittels der Wheatstone-Brücken-Messschaltung detektiert und anschließend mittels der Verstärkungsschaltung verstärkt werden und derart eingestellt werden kann, dass sie zur Analog-Digital-Wandlungsschaltung im RFID-Sensorchip passt. Der RFID-Chip stellt auch einen Temperatursensor bereit, dessen gemessene Temperatur dazu verwendet werden kann, die durch den Drucksensor gemessene Last zu korrigieren. Auf diese Weise können durch Temperatureinfluss auf die Dehnungsmessstreifen und elektrischen Leiter verursachte Messfehler reduziert werden. Dabei können der Referenzdehnungsmessstreifen 3, die elektrischen Leiter 4 und die Leiterplatte 1 zusammen mit dem Grundkörper 6 mit Kunststoff verkapselt sein.

Das Drahtloskommunikationsmodul umfasst den vorstehend erwähnten, auf der Leiterplatte 1 angeordneten RFID-Chip und eine an einer axialen Stirnseite des Grundkörpers 6 angeordnete Antenne 5, wobei die axiale Stirnseite, an der die Antenne 5 angeordnet ist, der axialen Stirnseite gegenüberliegt, auf der der Messdehnungsmessstreifen 2 angeordnet ist. Die Antenne 5 ist über elektrische Leiter 4 mit der Leiterplatte 1, insbesondere dem RFID-Chip, verbunden. Die elektrischen Leiter 4 sind in einen Kanal innerhalb des Grundkörpers 6 aufgenommen. Dabei bilden der RFID-Chip und die Antenne 5 zusammen ein RFID-Tag und umfasst die außerhalb des Lagers angeordnete Kommunikationsgegenstückausrüstung ein RFID-Lese-/Schreibgerät, das drahtlose Datenkommunikation mit dem RFID-Tag durchführen kann. Dabei werden die durch das Sensormessmodul bereitgestellten Lagerinformationen in eine elektromagnetische HF-Trägerwelle moduliert und durch die Antenne 5 übertragen, sodass der Lastzustand des Lagers drahtlos überwacht werden kann. Die Antenne 5 ist dabei vorzugsweise eine Keramikantenne, die bei kleiner Baugröße einen großen Antennengewinn erzielen kann. An einer Außenseite der Antenne 5 ist eine Antennenabdeckung 7 bereitgestellt. Die Antennenabdeckung 7 ist beispielsweise mittels einer Schraubverbindung auf dem Grundkörper 6 montiert. Die Antennenabdeckung 7 ist aus Kunststoff wie ABS, PPS oder PTFE hergestellt, der durch Hochfrequenzsignale mit niedriger Energie durchdrungen werden kann. Zwischen der Antenne 5 und der Antennenabdeckung 7 ist ein Dichtungselastomer, insbesondere ein Dichtungsgummi, bereitgestellt, sodass die Antenne 5 besser geschützt werden kann.

Das Drahtlosenergiezufuhrmodul umfasst eine Energieempfangsantenne und eine Energieverwaltungsschaltung. Dabei kann die für ein RFID-Tag des Drahtloskommunikationsmoduls verwendete Antenne 5 als Energieempfangsantenne des Drahtlosenergiezufuhrmoduls verwendet werden. Der RFID-Chip kann eine Energieverwaltungsschaltung bereitstellen. Wenn die Energiezufuhrantenne der Energiezufuhrgegenstückausrüstung elektromagnetische Wellen emittiert, bestrahlen die elektromagnetischen Wellen die Antenne 5 durch die Antennenabdeckung 7 und ein abdichtendes elastisches Teil hindurch, wobei die Antenne 5 als Energieempfangsantenne wirkt, um Energie von den elektromagnetischen Wellen zu erhalten. Die erhaltene Energie kann in einem Kondensator gespeichert und durch die Energieverwaltungsschaltung verarbeitet werden, um stabile Energiezufuhr bereitzustellen.

Dank des hochintegrierten RFID-Chips und der Dehnungsmessstreifen mit hohem Widerstand und hoher Empfindlichkeit kann der Energieverbrauch des Sensors auf einige hundert Mikrowatt oder weniger reduziert werden. Dies ist sehr wichtig für die Konstruktion eines passiven Drahtlossensors, da dies stark mit der effektiven Entfernung zusammenhängt. In einer offenen Umgebung kann die effektive Entfernung der Sensorvorrichtung 50 gemäß dieser Ausführungsform 5 Meter oder mehr betragen, was die Sensorvorrichtung für die meisten Anwendungen geeignet macht. Da die Sensorvorrichtung das Drahtloskommunikationsmodul und das Drahtlosenergiezufuhrmodul verwendet, kann die Sensorvorrichtung außerdem die Lagerlastinformationen in Echtzeit bereitstellen, wenn sie an einem rotierenden Element des Lagers angeordnet ist. Dies macht es auch möglich, dass die Sensorvorrichtung Lastmessungen an verschiedenen Positionen in der Umfangsrichtung des Lagers während der Rotation mit dem rotierenden Element durchführt. Daher können die Messanforderungen erfüllt werden, indem in jedem Lager nur eine derartige Sensorvorrichtung bereitgestellt ist.

Obwohl in der vorstehenden Beschreibung mögliche Ausführungsformen veranschaulichend beschrieben wurden, versteht es sich, dass es durch Kombinationen aller bekannten technischen Merkmale und Ausführungsformen sowie jener, die für den Fachmann leicht ersichtlich sind, noch eine große Zahl von Ausführungsvarianten gibt. Außerdem versteht es sich ferner, dass die Ausführungsbeispiele nur Beispiele sind und den Schutzumfang, die Anmeldung und den Aufbau der vorliegenden Erfindung in keiner Weise einschränken sollen. Die vorstehende Beschreibung soll dem Fachmann vielmehr eine technische Anleitung zur Umsetzung mindestens eines Ausführungsbeispiels an die Hand geben, an der verschiedene Änderungen, insbesondere Änderungen der Funktionen und Strukturen der Komponenten, vorgenommen werden können, sofern diese nicht vom Schutzumfang der Ansprüche abweichen.

### LISTE DER BEZUGSZEICHEN

- 10: Innenring
- 20: Außenring
- 30: Wälzelement
- 40: Halter
- 50: Sensorstift der Sensorvorrichtung
- 1: Leiterplatte
- 2: Dehnungsmessstreifen
- 3: Dehnungsmessstreifen
- 4: Elektrischer Leiter
- 5: Antenne
- 6: Grundkörper
- 7: Antennenabdeckung

## Patentansprüche

1. Sensorvorrichtung für ein Lager, wobei die Sensorvorrichtung (50) einen Sensorkörper zum Montieren in das Lager mittels einer Presspassung umfasst und der Sensorkörper versehen ist mit:
- einem Sensormessmodul, umfassend einen Drucksensor zum Messen der Last des Lagers und einen Temperatursensor zum Messen der Temperatur der Sensorvorrichtung, wobei die gemessene Last mittels der gemessenen Temperatur korrigiert wird;
- einem Drahtloskommunikationsmodul, das zum drahtlosen Übertragen von Lagerinformationen von dem Sensormessmodul verwendet wird; und
- einem Drahtlosenergiezufuhrmodul, das zum Zuführen von Energie für das Sensormessmodul und das Drahtloskommunikationsmodul verwendet wird.

2. Sensorvorrichtung nach Anspruch 1, wobei der Sensorkörper einen stiftförmige Grundkörper (6) und eine Leiterplatte (1) umfasst, wobei der Grundkörper (6) mittels einer Presspassung in das Lager montiert werden kann und wobei die Leiterplatte (1) zum teilweisen Montieren von Elementen der drei Module an dem Grundkörper (6) verwendet wird.

3. Sensorvorrichtung nach Anspruch 2, wobei das Drahtloskommunikationsmodul einen auf der Leiterplatte (1) angeordneten RFID-Chip und eine auf dem Grundkörper (6) angeordnete Antenne (5) umfasst und der RFID-Chip und die Antenne (5) zum Durchführen drahtloser Kommunikation mit einer außerhalb des Lagers angeordneten Kommunikationsgegenstückausrüstung verwendet werden.

4. Sensorvorrichtung nach Anspruch 3, wobei der Drucksensor mindestens zwei Dehnungsmessstreifen (2, 3) umfasst, wobei die mindestens zwei Dehnungsmessstreifen (2, 3) zum Realisieren der Presspassung in einem Bereich des Grundkörpers (6) angeordnet sind, wobei einer der mindestens zwei Dehnungsmessstreifen (2, 3) an einer axialen Stirnseite des Grundkörpers (6) angeordnet ist und der andere der mindestens zwei Dehnungsmessstreifen (2, 3) an einer Umfangsfläche des Grundkörpers (6) derart angeordnet ist, dass er sich mindestens teilweise in axialer Richtung erstreckt.

5. Sensorvorrichtung nach Anspruch 4, wobei auf der Leiterplatte (1) eine Messschaltung und eine Messsignalverarbeitungsschaltung für die Dehnungsmessstreifen (2, 3) angeordnet sind.

6. Sensorvorrichtung nach Anspruch 5, wobei der RFID-Chip in der Messsignalverarbeitungsschaltung eine Analog-Digital-Wandlungsschaltung bereitstellt.

7. Sensorvorrichtung nach einem der Ansprüche 4 bis 6, wobei der RFID-Chip den Temperatursensor bereitstellt.

8. Messvorrichtung nach einem der Ansprüche 4 bis 7, wobei die Antenne (5) auf einer axialen Stirnseite des Grundkörpers (6) angeordnet ist, wobei die axiale Stirnseite einer axialen Stirnseite gegenüberliegt, auf der der Dehnungsmessstreifen (2) angeordnet ist.

9. Sensorvorrichtung nach Anspruch 8, wobei eine Antennenabdeckung (7) auf einer Außenseite der Antenne (5) bereitgestellt ist.

10. Sensorvorrichtung nach Anspruch 9, wobei zwischen der Antenne (5) und der Antennenabdeckung (7) ein Dichtungselastomer bereitgestellt ist.

11. Sensorvorrichtung nach einem der Ansprüche 3 bis 10, wobei die Antenne (5) als Energieempfangsantenne des Drahtlosenergiezufuhrmoduls verwendet werden kann, sodass von einer außerhalb des Lagers angeordneten Energiezufuhrgegenstückausrüstung zugeführte Energie drahtlos erhalten werden kann.

12. Sensorvorrichtung nach einem der Ansprüche 3 bis 11, wobei der RFID-Chip eine Energieverwaltungsschaltung des Drahtlosenergiezufuhrmoduls bereitstellt.

13. Sensorvorrichtung nach einem der Ansprüche 2 bis 12, wobei ein Kanal zum Aufnehmen elektrischer Leiter (4) innerhalb des Grundkörpers (6) angeordnet ist.

14. Sensorvorrichtung nach einem der Ansprüche 2 bis 13, wobei der Grundkörper (6) mit einer Hilfsverbindungsstruktur zum Verbinden mit einem Lagerelement des Lagers versehen ist.

15. Sensorvorrichtung nach einem der Ansprüche 2 bis 14, wobei der Grundkörper (6) aus dem gleichen Material besteht wie das Lagerelement, auf dem die Sensorvorrichtung montiert ist.

16. Sensorvorrichtung nach einem der Ansprüche 2 bis 15, wobei die Sensorvorrichtung mindestens teilweise verkapselt ist.

17. Lagerkomponente, umfassend ein Lager und die Sensorvorrichtung (50) nach einem der Ansprüche 1 bis 16.

18. Lagerkomponente nach Anspruch 17, wobei
die Sensorvorrichtung (50) in einem Montageloch eines Außenrings (20) oder eines Innenrings (10) des Lagers montiert ist, wobei sich das Montageloch entlang einer axialen Richtung des Lagers erstreckt;
alternativ dazu die Sensorvorrichtung (50) in einem Montageloch eines Wälzelements (30) des Lagers montiert ist, wobei sich das Montageloch entlang einer Mittelachse des Wälzelements (30) erstreckt.

19. Sensorsystem für ein Lager, wobei das Sensorsystem die Sensorvorrichtung nach einem der Ansprüche 1 bis 16 und eine außerhalb des Lagers angeordnete Sensorvorrichtungsgegenstückausrüstung umfasst.

20. Lagerbaugruppe, umfassend ein Lager und das Sensorsystem nach Anspruch 19.
